# EUROPEAN PATENT APPLICATION

(11) **EP 2 064 946 A2**
(43) Date of publication of application: **03.06.2009**
(21) Application number: 08253813.3
(22) Date of filing: 26.11.2008
(51) Int. Cl.: A01K 89/027

(54) **Fishing reel**

(30) Priority: 30.11.2007 GB 0723491
(71) Applicant: Fox International Group Limited, Hainault, Essex IG6 3UT (GB)
(72) Inventor: Little, Andy, Farnham Surrey GU9 7BW (GB); Little, Mark, Farnham Surrey GU9 7BW (GB)
(74) Representative: Crouch, David John

(57) **Abstract**

A fishing reel (10) having a spool shaft (18), a hand-driven crown wheel (28), a reciprocating mechanism (38, 40) coupled to the spool shaft (18) and the crown wheel (28) to reciprocate the spool shaft (18) longitudinally when the crown wheel (28) is rotated. An auxiliary shaft (44) is coupled to the spool shaft (18) such that rotation of one of the shafts about its axis causes rotation of the other about its axis. The auxiliary shaft (44) is provided with a locking mechanism (48 to 78) which serves to lock it and hence also the spool shaft (18) against axial rotation. The locking mechanism (48 to 78) comprises an actuating member (54) movable between a lock engagement position and a lock disengagement position. A dead-point mechanism (64) is coupled to the actuating member (54) so that the actuating member (54) operates the dead-point mechanism (64) and vice versa. A lock member (48) is fixed to the auxiliary shaft (44). A detent (50) is arranged to be operated by the actuating member (54) such that it is moved from an engagement region which it occupies when the actuating member (54) is in its lock engagement position. The detent (50) engages the lock member (48) to lock the auxiliary shaft (44), and with it the spool shaft (18), against rotation, to a disengagement region when the actuating member (54) is in its lock disengagement position, so that the spool shaft (18) is rotatable about its axis. The dead-point mechanism (64) has an engagement portion (74) which is engagable by a switching portion (80) which rotates with the crown wheel (28) to switch the dead-point mechanism (64) and with it the actuating member (54) from its lock disengagement position to its lock engagement position when the crown wheel (28) is rotated. The engagement portion (74) comprises a leg portion (74) which is pivotally attached at one end to a movable part (66) of the dead-point mechanism (64) and has a free end (78) further from that pivoted end. The leg portion (74) is oriented such that when the switching portion (80) engages the said free end (78) of the leg portion (74) it urges the latter in a direction towards the pivot end of the leg portion (74). The dead-point mechanism (64) is so constructed that the free end (78) of the leg portion (74) is retracted away from the switching portion (80) when the dead-point mechanism (64) is thus switched.

## Description

The present invention relates to a fishing reel having a spool shaft, a hand-driven crown wheel, a reciprocating mechanism coupled to the spool shaft and the crown wheel to reciprocate the spool shaft longitudinally when the crown wheel is rotated, and an auxiliary shaft coupled to the spool shaft such that rotation of one of the shafts about its axis causes rotation of the other about its axis, in which the auxiliary shaft is provided with a locking mechanism which serves to lock it and hence also the spool shaft against axial rotation, the locking mechanism comprising an actuating member movable between a lock engagement position and a lock disengagement position, a dead-point mechanism coupled to the actuating member so that the actuating member operates the dead-point mechanism and vice versa, a lock member fixed to the auxiliary shaft, and a detent arranged to be operated by the actuating member such that it is moved from an engagement region which it occupies when the actuating member is in its lock engagement position and in which the detent engages the lock member to lock the auxiliary shaft, and with it the spool shaft, against rotation, to a disengagement region when the actuating member is in its lock disengagement position, so that the spool shaft is rotatable about its axis, in which the dead-point mechanism has an engagement portion which is engagable by a switching portion which rotates with the crown wheel to switch the dead-point mechanism and with it the actuating member from its lock disengagement position to its lock engagement position when the crown wheel is rotated.

One such fishing reel is disclosed in European Patent Specification No. 0649595. As shown for example in Figure 12 thereof, a protrusion on the crown wheel flips a pivotable abutment part which thereby rotates about its pivot to operate the dead-point mechanism of the reel. However, the movement obtained thereby is relatively slight as a result of which it is possible for the dead-point mechanism to jam at its dead-point.

The present invention seeks to provide a remedy. In doing this, the invention takes advantage of the shorter spacing, in the direction of the axes of the spool shaft, between the crown wheel and the locking mechanism by virtue of the twin shaft construction (auxiliary shaft and spool shaft), as well as the increased dimension of the reel transversely of the twin shafts in the direction of the spacing between those shafts, relative to a fishing reel which has no such auxiliary shaft and which has its lock member on a part of the spool shaft rearwardly of the reciprocating mechanism.

Accordingly, the present invention is directed to a fishing reel having a construction as set out in the opening paragraph of the present specification, in which the engagement portion comprises a leg portion which is pivotally attached at one end to a movable part of the dead-point mechanism and has a free end further from that pivoted end, the leg portion being oriented such that when the switching portion engages the said free end of the leg portion it urges the latter in a direction towards the pivot end of the leg portion, and in which the dead-point mechanism is so constructed that the free end of the leg portion is retracted away from the switching portion when the dead-point mechanism is thus switched.

Preferably, the switching portion is on a hub of the crown wheel to increase the leverage with which the dead-point mechanism is switched upon rotation of the crown wheel.

Advantageously, the switching portion is in the form of a ratchet tooth so that the dead-point mechanism is switched upon rotation of the crown wheel in one sense but not in the opposite sense.

Preferably, the hub of the crown wheel is provided with a plurality of such ratchet teeth to reduce the amount of rotation of the crown wheel required before the dead-point mechanism is switched.

Advantageously, the reel is provided with a guide which receives a part of the free end of the leg portion and provides a path along which that part is guided, to move it away from the switching portion when the dead-point mechanism is switched upon rotation of the crown wheel.

Alternatively, or in addition, a tension spring is connected between the leg portion and another part of the reel to urge the free end of the leg portion away from the switching portion when the dead-point mechanism is switched upon rotation of the crown wheel.

An example embodiment of the present invention will now be described in greater detail with reference to the accompanying drawings, in which:
- Figure 1: is a part cut-away side view of a fishing reel embodying the present invention, and
- Figure 2: shows on a different scale parts of the reel shown in Figure 1 with other parts removed for the sake of clarity, with a locking mechanism thereof in its locking position.

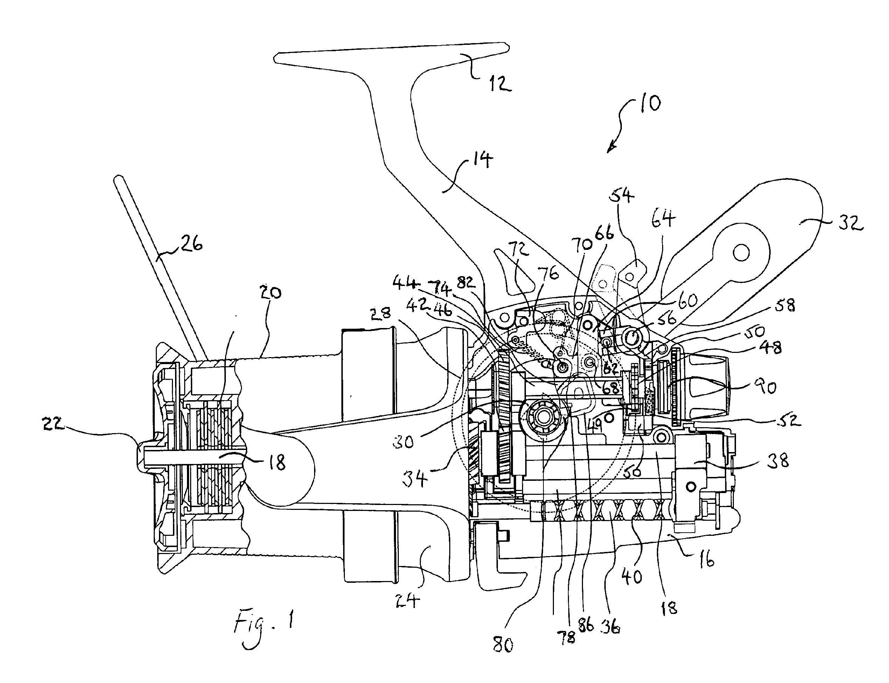

Figure 1 shows a fishing reel 10 having a mounting foot 12 at one end of a mounting leg 14, the other end of which is integral with a housing 16 of the reel. A spool shaft 18 extends within and forwardly of the housing 16. A spool 20 is mounted on the forward end of the spool shaft that projects forwardly of the housing 16 via an adjustable braking mechanism 22. A rotor 24 provided with a bail arm 26 is mounted between the housing 16 and the spool 20 so as to be rotatable coaxially with but independently of the spool shaft 18.

A crown wheel 28 rotatably mounted within the housing 16 so as to be rotatable about an axis which is transverse of the spool shaft 18 is provided with a hub 30 and is coupled to a handle 32 so that the crown wheel 28 is hand-driven.

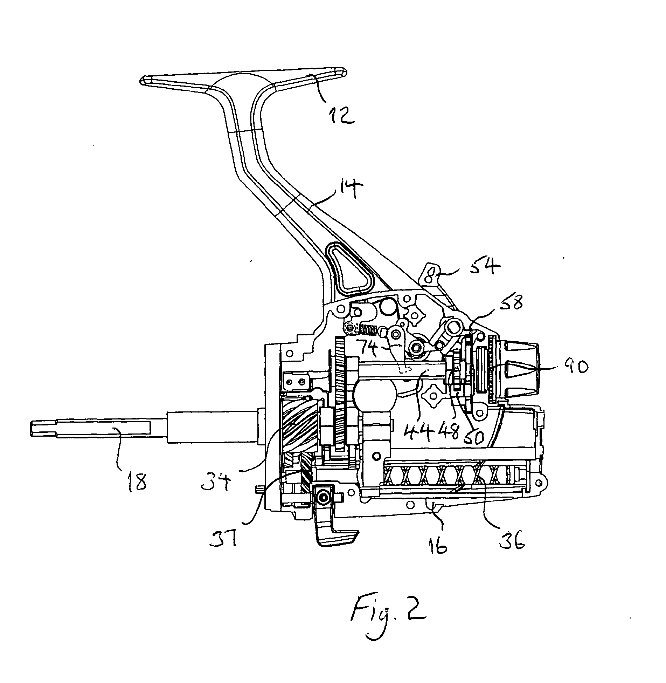

The teeth of the crown wheel 28 mesh with teeth of a rotor gear wheel 34 so that rotation of the crown wheel 28 by the handle 32 causes the rotor 24 to rotate about its axis. A worm shaft 36 is mounted within the housing 16 so as to be rotatable about its axis which extends parallel to the spool shaft 18. It has a gear wheel 37 (shown in Figure 2) which is also coupled to the rotor gear wheel 34 so that when the latter rotates, the worm shaft 36 also rotates about its axis.

The spool shaft 18 is provided at its rear end within the housing 16 with a coupling 38 that couples that end of the spool shaft 18 to the worm 40 of the worm shaft 36. A spool shaft gear wheel 42 is mounted so as to be fixed relative to the spool shaft 18 as regards rotation about the axis of the spool shaft, but at the same time so as to be slidable relative to the spool shaft 18 so that the latter can slide through it. In this regard the spool shaft 18 is provided with a flat (not shown) which is engaged by a straight boundary of a central aperture (not shown) in the gear wheel 42 so that whilst the spool shaft 18 can slide longitudinally through the gear wheel 42, it is not free to rotate about its axis relative thereto.

An auxiliary shaft 44 is mounted within the housing 16 parallel to the spool shaft 18 and rotatable about its axis when it is not in a locked condition. It is provided with a gear wheel 46 at its forward end which meshes with the gear wheel 42 of the spool shaft so that rotation of the auxiliary shaft 44 causes rotation of the spool shaft 18 and vice versa. The other end of the auxiliary shaft 44 is provided with a lock wheel 48 which is fixed relative to the auxiliary shaft 44. The lock wheel 48 extends in a plane which is transverse of the axis of the auxiliary shaft 44. It has castellations 49 between which there are gaps. Any one of these may be engaged by a detent 50 which, with the lock wheel 48, forms part of a locking mechanism. The detent 50 is urged upwardly, with the reel oriented as shown in the drawing, by a compression spring 52.

The locking mechanism further comprises an actuating lever 54 pivotable about a pivot 56, and a first arm 58 which is fixed to the actuating lever 54 close to its pivot 56. This arm rests on an upper end of detent 50 so that when the actuating lever 54 is in the position shown in Figure 1 in solid lines, being the disengaging position, the arm 58 holds the detent 50 down against the urging force of the compression spring 52 and out of engagement with the lock wheel 48.

Twin arms 60 also fixed to and extending from the hub of the actuating lever 54 extend on opposite sides of a pin 62 which is an integral part of a rocker 66 which in turn is pivotable about a pivot 68 between a disengaging position shown in Figure 1 and an engaging position shown in Figure 2. The rocker constitutes part of a dead-point mechanism 64. A loop spring 70 is connected between a lug of the rocker 68 and a leg 72 on the inside of the housing 16. The loop spring 70 urges the rocker 66 towards one of its extreme limits of available rotation with only a small range of positions at its dead-point for which it does not urge the rocker 66 in either sense.

A leg portion 74 is pivoted to a part of the rocker 66 which is on the opposite side of the pivot 68 to the pin 62 by way of a further pivot 76. A free end 78 of the leg portion 74 extends close to the hub 30 of the crown wheel 28 when the locking mechanism and with it the dead-point mechanism is in the disengaging position.

Ratchet teeth 80 are on the hub 30 of the crown wheel 28 so that when the crown wheel 28 is rotated in an anti-clockwise sense viewing the wheel as in Figure 1 any one of the teeth 80 can engage the free end 78 of the leg portion 74 so as to urge it upwardly as viewed in that Figure. If the crown wheel 28 is rotated in a clockwise sense viewing the wheel as in Figure 1, the sloping sides of the ratchet teeth 80 will simply urge the leg portion 74 away from the hub 30 of the crown wheel 28. A tension spring 82 connected between a lug of the leg portion 74 and a part which is fixed to the housing 16 acts to restore the position of the leg portion 74 after a ratchet tooth 80 has passed by the free end 78 of the leg portion 74 in this sense of rotation of the crown wheel 28.

A guide 86 is provided on the inside of the reel housing 16 to guide the free end 78 of the leg portion 74, in a clockwise sense, viewing the reel as in Figure 1, around a path defined by the guide 86.

An adjustable braking mechanism 90 is provided at the end of the auxiliary shaft 44 opposite the end which carries the auxiliary shaft gear wheel 46.

When the reel is in use, it is secured to a fishing rod by way of its mounting foot 12 received in a mounting shoe (not shown) on the rod (not shown).

Initially the bail arm 26 is moved out of the way of the spool 20 so that the line which has been laid on the spool is free to spill off it during casting. After casting the bail arm 26 is returned to the position shown in Figure 1 and the rod to which the reel is attached is rested on banksticks or on rod support apparatus. The actuating lever 54 is in the position it has in Figure 1, pivoted upwardly away from the reel housing 16. In this position the arm 58 fixed to the lever 54 holds the detent 50 in a downward position against the resilient force of the compression 52, and away from the locking wheel 48. As a result the auxiliary shaft 44 and the spool shaft 18 are free to rotate about their respective axes, against only a relatively low braking force or drag exerted by the rear braking mechanism 90. In the event therefore that a fish is caught on a hook at the end of the line and it increases the tension on the line, the spool 20 is free to rotate, unwinding further line from the spool as required by the fish so as not to pull the rod off its support.

Upon making a strike, the user may now rotate the handle 32 in an anti-clockwise sense viewing the reel as in Figure 1. The ratchet tooth 80 on the hub of the crown wheel 28 which at that moment is approaching the free end 78 of the leg portion 74, then abuts that free end and urges that end in a direction towards the pivot 76 of the leg portion 74. The pivot 76 is thereby lifted and with it the rocker 66 to rotate the arms 60 and 58 and with them the lever 54 in an anti-clockwise sense viewing the reel as in Figure 1. This is effected by way of the pin 62 of the rocker 66 acting on the lower of the arms 60 as the rocker 66 pivots in a clockwise sense, viewing the reel as in Figure 1, about the pivot 68. The leg portion 74 is urged in this way, and with it the rocker 66, all the way past the dead-point determined by the loop spring 70 so that the rocker 66 and the actuating lever 54 snap towards the further end of their travel so that the actuating lever 54 is now in its engaging position shown in dotted lines in Figure 1, the arm 58 on the hub of the lever 54 is in a raised position relative to the position it has in Figure 1, and the compression spring 52 lifts the detent 50. If a lower part of the latter strikes one of the castellations 49 of the lock wheel 48, it will be urged by the compression spring 52 upon subsequent rotation of the lock wheel 48 into the next gap between two castellations 49 of the lock wheel 48. Otherwise that lower part will move straight into such a gap. The lock wheel 48 will then be prevented from further rotation so that the auxiliary shaft 44 and, by virtue of the coupling of that shaft to the spool shaft 18 via the gear wheels 42 and 46, also the spool shaft 18 will be locked against further rotation.

In the meantime the free end 78 of the leg portion 74 has been guided by the guide 86, and also by the action of the tension spring 82, away from the ratchet tooth 80 and the hub 30 from the crown wheel 28.

In this locked position of the spool shaft 18, in the event that the fish pulls away from the rod, the spool is still free to rotate to unwind line from it, but only under the action of the much stronger braking or drag force of the front brake mechanism 22 because the spool shaft 18 is locked against rotation by the locking mechanism. In the event that the fish swims towards the rod, rotation of the handle 32 by the user and with it the crown wheel 28 causes the simultaneous rotation of the rotor 24 and with it the bail arm 26 to lay the line on the spool 20 whilst the latter is reciprocated by the reciprocation mechanism comprising the worm shaft 36 and the coupling 38.

The reel 10 can be reset by lifting the actuating lever 54 about its pivot 56 away from the reel body 16. As this is done, the arm 58 urges the detent 50 downwardly against the action of the compression spring 52 and out of engagement with the lock wheel 48. At the same time the free end 78 of the leg portion 74 travels in a clockwise sense viewing the wheel as in Figure 1 around the guide 86 until it returns to the position it has as shown in Figure 1.

It will be appreciated in this respect that if the hand wheel 32 is moved about the axis of the crown wheel 28 in a clockwise sense as viewed in Figure 1, the sloping sides of the ratchet tooth 80 will simply brush against the free end 78 of the leg portion 74 so that its free end 78 enters a bottom part of the guide 86 whereafter the leg portion 74 returns to the position it has in Figure 1 under the action of the tension spring 82 without triggering the dead-point mechanism. Therefore, only rotation of the handle 32 and with it the hub 30 of the crown wheel 28 in an anti-clockwise sense viewing the reel as in Figure 1, will switch the dead-point mechanism and with it the locking mechanism from an unlocked position to a locked position.

Numerous modifications and variations to the illustrated reel could be made without taking it outside the scope of the present invention. To give one example only, the rear braking mechanism 90 could be omitted, and/or the relative sizes of the gear wheels 34 and 46 could be altered to obtain a different gear ratio. Alternatively, they could be made of the same diameter so that the auxiliary shaft and the spool shaft rotate at the same angular speed.

## Claims

1. A fishing reel (10) having a spool shaft (18), a hand-driven crown wheel (28), a reciprocating mechanism (38, 40) coupled to the spool shaft (18) and the crown wheel (28) to reciprocate the spool shaft (18) longitudinally when the crown wheel (28) is rotated, and an auxiliary shaft (44) coupled to the spool shaft (18) such that rotation of one of the shafts about its axis causes rotation of the other about its axis, in which the auxiliary shaft (44) is provided with a locking mechanism (48 to 78) which serves to lock it and hence also the spool shaft (18) against axial rotation, the locking mechanism (48 to 78) comprising an actuating member (54) movable between a lock engagement position and a lock disengagement position, a dead-point mechanism (64) coupled to the actuating member (54) so that the actuating member (54) operates the dead-point mechanism (64) and vice versa, a lock member (48) fixed to the auxiliary shaft (44), and a detent (50) arranged to be operated by the actuating member (54) such that it is moved from an engagement region which it occupies when the actuating member (54) is in its lock engagement position and in which the detent (50) engages the lock member (48) to lock the auxiliary shaft (44), and with it the spool shaft (18), against rotation, to a disengagement region when the actuating member (54) is in its lock disengagement position, so that the spool shaft (18) is rotatable about its axis, in which the dead-point mechanism (64) has an engagement portion (74) which is engagable by a switching portion (80) which rotates with the crown wheel (28) to switch the dead-point mechanism (64) and with it the actuating member (54) from its lock disengagement position to its lock engagement position when the crown wheel (28) is rotated, **characterised in that** the engagement portion (74) comprises a leg portion (74) which is pivotally attached at one end to a movable part (66) of the dead-point mechanism (64) and has a free end (78) further from that pivoted end, the leg portion (74) being oriented such that when the switching portion (80) engages the said free end (78) of the leg portion (74) it urges the latter in a direction towards the pivot end of the leg portion (74), and in which the dead-point mechanism (64) is so constructed that the free end (78) of the leg portion (74) is retracted away from the switching portion (80) when the dead-point mechanism (64) is thus switched.

2. A fishing reel according to claim 1, **characterised in that** the switching portion (80) is on a hub (30) of the crown wheel (28) to increase the leverage with which the dead-point mechanism (64) is switched upon rotation of the crown wheel (28).

3. A fishing reel according to claim 1 or claim 2, **characterised in that** the switching portion (80) is in the form of a ratchet tooth so that the dead-point mechanism (64) is switched upon rotation of the crown wheel (28) in one sense but not in the opposite sense.

4. A fishing reel according to claim 3, **characterised in that** the hub (30) of the crown wheel (28) is provided with a plurality of such ratchet teeth (80) to reduce the amount of rotation of the crown wheel (28) required before the dead-point mechanism (64) is switched.

5. A fishing reel according to any preceding claim, **characterised in that** the reel (10) is provided with a guide (86) which receives a part of the free end (78) of the leg portion (74) and provides a path along which that part is guided, to move it away from the switching portion (80) when the dead-point mechanism (64) is switched upon rotation of the crown wheel (28).

6. A fishing reel according to any preceding claim, **characterised in that** a tension spring (82) is connected between the leg portion (74) and another part of the reel (10) to urge the free end (78) of the leg portion (74) away from the switching portion (80) when the dead-point mechanism (64) is switched upon rotation of the crown wheel (28).
